Europäisches Patentamt

(19) European Patent Office

Office européen des brevets

(11) Publication number: **0 066 294**
A1

(12) # EUROPEAN PATENT APPLICATION

(21) Application number: 82104824.6

(22) Date of filing: 02.06.82

(51) Int. Cl.³: **B 62 M 9/08**

(30) Priority: 03.06.81 GB 8116989

(43) Date of publication of application:
08.12.82 Bulletin 82/49

(84) Designated Contracting States:
AT BE CH DE FR IT LI LU NL SE

(71) Applicant: R.V.T. DESIGN & ENGINEERING LIMITED
9 Thicknall Rise Hagley
Stourbridge West Midlands DY9 OLQ(GB)

(71) Applicant: YAMAHA MOTOR N.V.
Prof. E.M. Meyerslaan 3
NL-1183 AV Amstelveen(NL)

(72) Inventor: Trigg, Robert Victor
9 Thicknall Rise Hagley
Stourbridge West Midlands DY9 0LQ(GB)

(74) Representative: Leach, John Nigel et al,
FORRESTER & BOEHMERT Widenmayerstrasse 41
D-8000 München 22(DE)

(54) **Transmission.**

(57) A transmission for transmitting drive from a power unit
(12) to a ground-engaging means (11) includes means such
as a non-circular sprocket wheel (14) sequentially to increase
and decrease the torque applied to the ground-engaging
means (11) as the means (11) is rotated.

FIG 1

EP 0 066 294 A1

Title:   "Transmission"


This invention relates to a transmission for transmitting power from a power unit e.g. an internal combustion engine, to a ground engaging means of a vehicle such as a wheel or wheels, and to a vehicle incorporating such transmission.   More particularly, but not exclusively, the invention relates to a transmission for a loop driven vehicle such as a motorcycle.

In slippery road conditions, especially in motorcycle competition events such as motorcross, the driving torque applied to a rear wheel of a motorcycle can overcome the reaction torque applied to the wheel due to the friction between the rear wheel and the ground, which results in the wheel spinning relative to the ground.

Objects of the present invention are to provide a new or improved transmission which overcomes or reduces this problem, and a vehicle incorporating such a transmission.

According to one aspect of the invention, we provide a transmission for transmitting drive from a power unit to rotatable ground-engaging means, said transmission including means sequentially to increase and decrease the torque applied to the ground-engaging means at least once during each rotation of the ground-engaging means.

Preferably, the transmission includes gear means which may change the ratio of the speed of rotation of a driven part of the engine, such as an output shaft, relative to the speed of rotation of the ground-engaging means or merely transmit drive from the driven part of the engine to the ground-engaging means in the same ratio, and the torque is sequentially increased and decreased by sequentially changing the distance from a centre of rotation of at least one gear wheel of the gear means to an operative position as herein defined.

By "operative position" we mean a position at which, torque is transmitted between the gear wheel and an engaging further gear. By "gear wheel" we mean any wheel having means to engage a further gear, for example a sprocket wheel, toothed pulley wheel, cog wheel, or pulley wheel or the like and by "further gear" we mean any element engageable with the gear wheel, such as a link chain, toothed belt, cog wheel or drive belt or the like, respectively.

As the torque varies sequentially, the speed of rotation of the ground-engaging means thus changes sequentially but inversely, between a maximum and a minimum at least once during each rotation of the gear wheel, whilst the power unit may maintain substantially constant output.

It has been found that such a transmission substantially decreases the tendency of the ground-engaging means to spin relative to the ground in slippery conditions during drive, and further, where the power unit and transmission are used as a brake, a transmission according to the invention has been found beneficially to assist in reducing the speed of the vehicle.

In a preferred embodiment, said gear means comprises a drive wheel such as a sprocket wheel, or toothed pulley wheel driven by the power unit, and a driven wheel such as a sprocket wheel or toothed pulley wheel operatively connected to the ground-engaging means, said drive and driven wheels being at the same or different diameters to achieve a desired gear ratio, a continuous loop such as a chain or toothed belt engaging the drive and driven wheels, one of said wheels comprising said at least one gear wheel.

To achieve said sequential changes in the distance from the centre of rotation of said gear wheel to said operative position, the gear wheel may be of non-circular configuration preferably having an odd number of lobes. Thus the distance from the centre of rotation of the gear wheel to a part of the loop, e.g. the centre axis of the chain or belt, at said operative position, varies as the gear wheel rotates. For example, the non-circular drive or driven wheel may have one or more lobes such as two lobes and be thus of oval or substantially oval configuration, three lobes and be thus of epitrochoidal or substantially epitrochoidal configuration, four lobes and be thus tetratrochoidal or substantially tetratrochoidal configuration or five lobes. However, when more than five lobes are provided, the wheel approaches a circular shape and thus said distance remains substantially constant as the wheel rotates and the torque in this case is not adequately sequentially increased or decreased to achieve the above described advantage.

For example, the variation in the torque for a two-lobed wheel may be up to 50%, of a three-lobed wheel up to $33\frac{1}{3}$%, and of a five-lobed wheel only 10%.

The drive wheel may be driven by a power unit through gears in a gearbox of the vehicle, and the driven wheel may be mounted for rotation with the ground-engaging means.

Preferably, an odd number of lobes are provided on the non-circular wheel because where an even number of lobes are provided, the loop will be continuously made taut and then slackened as the non-circular wheel rotates. This is because the length of the part of the loop engaged around the gear wheel remains substantially constant whereas where an even number of lobes are provided, this length varies substantially.

In a further embodiment, instead of one or both driven and driven wheels being non-circular, one or more parts of the loop may be of different configuration to corresponding parts of the remainder of the loop whereby said different parts of the loop engage the drive and driven wheels closer to the centres of rotation of either of the wheels at their respective operative positions, than said corresponding parts of the remainder of the loop.

For example, in a transmission having toothed sprocket wheels which are engaged by a chain loop comprising a plurality of side elements connected together by transverse elements which when the loop is engaged with the sprocket wheels, are received in spaces between the teeth, at selected intervals along the loop, one or more of said transverse elements may be of reduced size to enable the loop to move radially inwards of the gear wheels at said respective operative positions, although other arrangements are possible.

Generally each said transverse element carries a roller, one or more of the rollers comprising said different part, and being of reduced diameter.

In a still further embodiment, wherein said drive and driven wheels each comprise a sprocket wheel, which sprocket wheels are engaged by a chain loop comprising a plurality of side elements connected together by transverse elements which are received in spaces between the teeth, over part, parts or all of the length of the loop, the distance between adjacent transverse elements may be greater than the distance between said spaces of the sprocket wheels whereby the loop moves radially inwardly and outwardly sequentially of the sprocket wheels as the sprocket wheels rotate.

In each above case, if required, a loop guide and/or loop tensioner may be provided to reduce the problem of loop wear and to prevent the loop disengaging one or both of the drive and driven wheels when the loop is slack, and especially when the ground engaging wheel is rotated at high speed.

In another embodiment, the gear means may include a gearbox of the transmission in which said gear wheel is mounted, for example, for eccentric rotation about a shaft, or for planetary movement relative to a further gear wheel or shaft whereby said distance is sequentially varied.

However, one or more gear wheels of the gearbox may be of non-circular configuration if desired.

According to a second aspect of the invention, we provide a vehicle incorporating a transmission according to the first aspect of the invention.

The vehicle may comprise a loop driven vehicle such as a motorcycle.

The invention will now be described with the aid of the accompanying drawings in which:

FIGURE 1 is a diagrammatic side view of a motorcycle incorporating a transmission according to the invention;

FIGURE 2 is a detailed enlarged side view of part of the motorcycle of Figure 1 with parts of the frame and suspension removed for clarity;

FIGURE 3 is a side view of a loop guide for use in the motorcycle of Figure 1;

FIGURE 4 is a diagram illustrating how the non-circular sprocket shown in Figure 2 is designed;

FIGURE 5 is a diagrammatic side view of such a sprocket;

FIGURE 6a is a side view of a rear sprocket of a further embodiment of a transmission in accordance with the invention, in engagement with part of a chain, which is shown in section;

FIGURE 6b is a view similar to Figure 6a of the same sprocket in engagement with a different part of the chain;

FIGURES 7a and 7b are side views of a still further embodiment of the invention;

FIGURES 8a and 8b are side diagrammatic views of a yet still further embodiment.

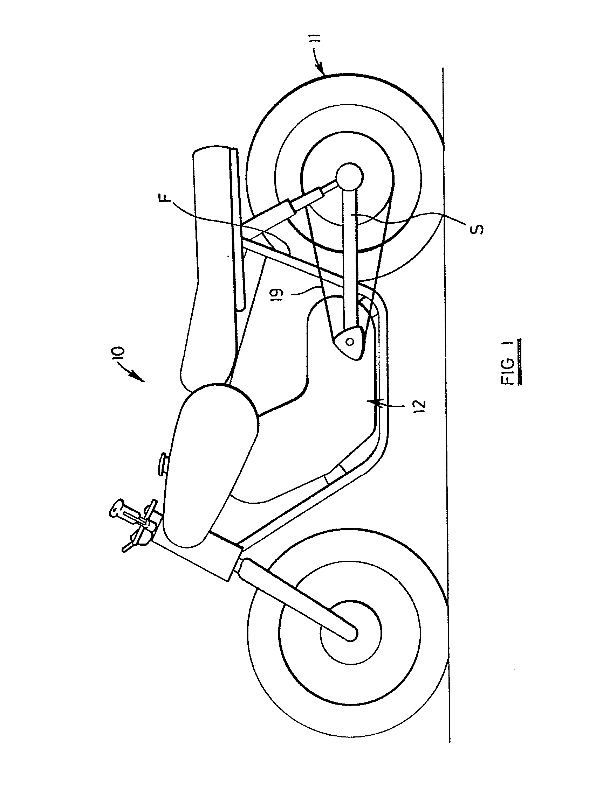

Referring first to Figure 1, there is shown a vehicle comprising a loop driven motorcycle 10 having a ground-engaging means comprising a driven rear wheel 11, mounted on a swinging arm S of a swinging arm type suspension as is well known in the art, and an engine and gearbox 12.

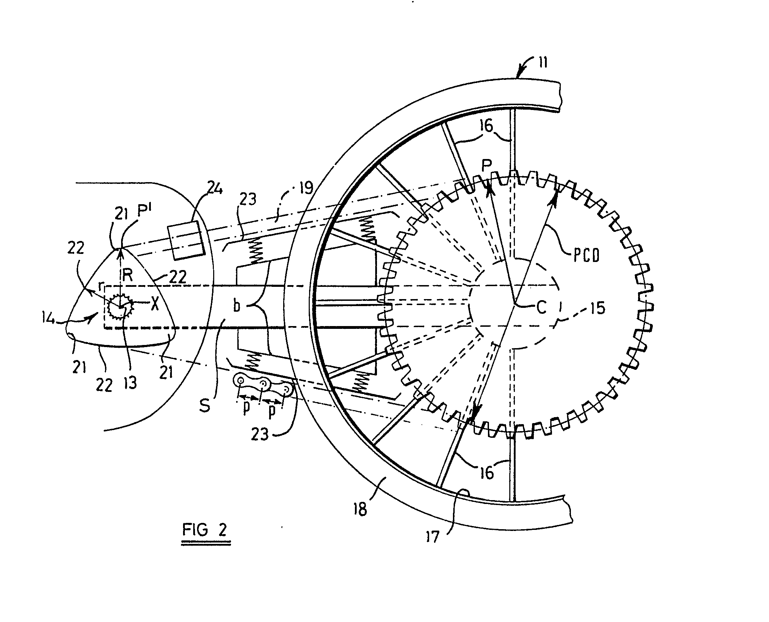

The motorcycle 10 further comprises a frame F on which the swinging arm S and the engine and gearbox 12 are mounted. The gearbox 12 has a plurality of cog wheels (not shown) which may be selected as is well known so that a splined output shaft 13 (Figure 2) of the gearbox is rotated at a different speed relative to the speed of an output shaft (not shown) of the engine.

Referring now to Figure 2, the rear wheel 11 is of well known construction having a hub 15 from which spokes 16 extend to a rim 17 on which an inflatable tyre 18 is provided.

Mounted on the output shaft 13 is a front drive wheel comprising a drive sprocket wheel 14 to enable power to be transmitted from the sprocket wheel 14 to the rear wheel 11, a chain 19 being entrained about the front drive sprocket wheel 14 of the output shaft 13 of the gearbox and a rear driven wheel comprising a driven sprocket wheel 20 mounted on the hub 15 and rotatable with the ground wheel 11. Of course if desired, any other type of loop may be provided, although a chain is preferred.

Where another type of loop is provided, instead of toothed sprocket wheels 14, 20, drive and driven wheels having other means to engage the loop need to be provided. For example, where a loop comprising a toothed belt is provided, the drive and driven wheels 14, 20 may comprise toothed pulley wheels provided with suitable belt engaging means therearound to receive teeth of the belt.

Further, alternately where for example the loop comprises a drive belt, the drive and driven wheels may comprise pulley wheels.

As the front drive sprocket wheel 14 is rotated by the engine, through the gearbox 12, the driven rear sprocket wheel 20 and hence the rear wheel 11 will thus be rotated.

It can be seen that the front sprocket wheel 14 is non-circular to enable the torque transmitted to the rear wheel 11 to be sequentially increased and decreased at least once during each rotation of the rear wheel 11, as explained below.   In a conventional vehicle having circular front and rear sprocket wheels engaged by a conventional chain, the distance Y from the centre of rotation of each sprocket wheel, such as centre C indicated on the circular sprocket wheel 20 in Figure 2, to an operative position P, i.e. a position at which torque is transmitted between the sprocket wheel 20 and the loop, remains constant as the sprocket wheel rotates. In a front sprocket wheel of conventional design, the operative position is the position at which torque is transmitted from the sprocket wheel to the loop, whereas in a rear sprocket wheel, the operative position is the position where torque is transmitted from the loop to the rear sprocket wheel.   In both cases, this is usually a position from where the loop extends from the sprocket wheel tangentially.

The pitch circle diameter PCD for the conventional circular rear sprocket wheel 20 is also shown in Figure 2.

However, in the case of the non-circular sprocket wheel 14 in Figure 2, which is epitrochoidal having three lobes each indicated at 21, the distance from the centre of rotation X of the sprocket wheel 14 to the operative position indicated at P' sequentially varies as the sprocket wheel 14 rotates, because the sprocket wheel 14 is not rotated about the centre from which the arc for each side 22 of the sprocket wheel 14 is drawn.

It can be seen that this distance varies as the sprocket wheel 14 rotates, from a minimum r when the midpoint of a side 22 is at position P', to a maximum R when an apex at the juncture of any pair of sides 22 is at position P'.

Thus a pulsed torque will be transmitted to the ground wheel 11 from the engine by the chain 19 thereby reducing the likelihood of the ground wheel 11 spinning relative to the ground.

Although this distance varies, for example between $r$ and R where the distance is measured to the centre axis of the chain 19, as the sprocket wheel 14 rotates, it can be seen that the length of the part of the chain 19 engaged with the sprocket wheel 14 varies a relatively small amount because an odd number of lobes 21 are provided on the sprocket wheel 14.

It can be shown that the variation in torque is proportional to the ratio $r$ : R, and for the three lobed sprocket wheel 14, is approximately $33\frac{1}{3}\%$.

In a two lobed sprocket wheel, the variation in torque can be as much as 50%, in a four lobed sprocket wheel, as much as 25% and in a five lobed sprocket wheel as much as 10%.

However, to alleviate any possibility of the chain 19 disengaging either the front or rear sprocket wheels 14, 20, especially at high speed, a pair of chain tensioners 23 are provided on brackets $b$ on the swinging arm S, which tensioners 23 each have a bearing part which engages the chain 19 to maintain the chain taut.

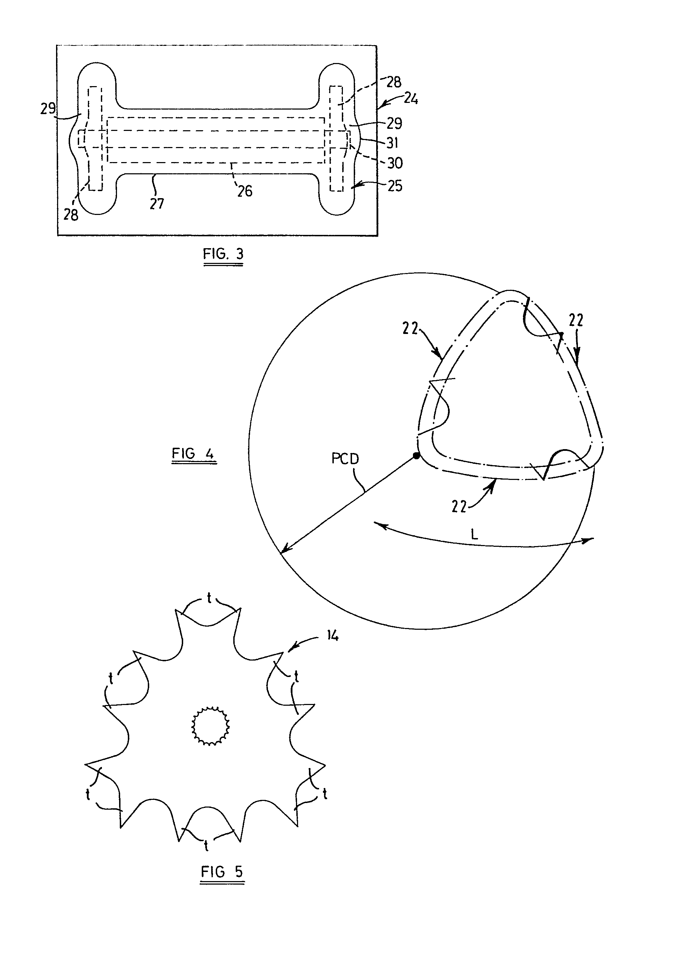

Furthermore, adjacent the front sprocket wheel 14 there is also provided a chain guide block 24 which is shown in Figure 3 in a more detailed front view. The block 24 has a substantially H-shaped opening 25 therein, through which the chain 19 passes. The rollers of the chain 19, which are indicated in dotted lines at 26, pass through a first slot part 27 and the side elements 28 of the chain 19 pass through second slot parts 29, the heads of rivets 30 which extend between the side elements 28 and carry the rollers 26, being accommodated in an enlarged part 31 of the second slot parts 29. Of course, for a chain or loop of different configuration, the configuration of the guide block 24 may need to be changed appropriately.

Referring now to Figures 4 and 5, factors in designing the non-circular epitrochoidal sprocket wheel 14 will be described.

The required ratio of the number of teeth $N_1$ on the front sprocket wheel 14 to the number of teeth $N_2$ on the rear sprocket wheel 20 is calculated to achieve "matching" between the power output of the gearbox 12 and the speed of rotation of the ground wheel 11, to achieve an efficient transmission, i.e. a desired gear ratio. It will be appreciated that the pitch of the teeth on the sprocket wheel 14 is usually the same as the pitch of the chain 19, for a satisfactory transmission to be achieved.

When the required ratio $N_1 : N_2$ has been calculated, and hence the number of teeth $N_1$ required on the front sprocket wheel 14 is known, the pitch circle diameter PCD, i.e. the diameter of an imaginary circle along which the tooth pitch of sprocket wheel 14 is measured, of each side 22 of the sprocket wheel 14, can be calculated as follows.

For a circular sprocket wheel having N teeth, the pitch circle diameter PCD can be calculated from the expression:

$$PCD = P \operatorname{cosec} (180^\circ/N)$$

Where P is the pitch of the chain 19 which is, in the present example, as indicated on the part of the chain 19 drawn in detail in Figure 2, i.e. the distance between identical parts, e.g. the rivets 30 of the chain 19.

For the non-circular sprocket wheel 14, a similar calculation is made to determine the pitch circle diameter PCD of each side 22 of the sprocket wheel 14 indicated in Figure 4. However, it will be appreciated that for an epitrochoidal sprocket wheel, the number of teeth on each side of the sprocket wheel 14 will be equal to $N_1/3$ where $N_1$ is the total number of teeth on the non-circular sprocket wheel 14. Because each side of the sprocket wheel 14 will have a length equal to one sixth of the total circumference of a circle having a diameter equal to the PCD of which each side 21 is a part, 'N' in the above expression for determining the PCD of a circular sprocket wheel must be replaced by $6N_1/3$ or $2N_1$.

The sprocket wheel 14 is made by machining but may be made from three sprocket wheel segments each having $N_1/3$ teeth, welded or otherwise secured together. A typical sprocket wheel 14 is shown in detail in Figure 5, although substantially less teeth $t$ are shown than would normally be provided in practice.

It can be shown that the length L of each arc, i.e. each side 22 of the epitrochoidal sprocket wheel 14 is given by:

$$L = \pi PCD/6$$

Although in the arrangement described the front sprocket wheel 14 has been described as being epitrochoidal, other configurations are of course possible. For example, the sprocket wheel 14 may be two lobed, e.g. oval in which case the arc length L' of each side will be equal to $\pi PCD/4$ although "N" in the above expression for determining the PCD in a circular sprocket wheel, will still be equal to $2N_1'$ where $N_1'$ is the total number of teeth on the sprocket wheel. Alternatively, a sprocket wheel of tetracohoidal configuration having four lobes may be provided in which case the arc length L'' of each side of the sprocket wheel will be equal to $\pi PCD/8$ although again "N" in the above expression for determining the PCD in a circular sprocket wheel needs to be replaced by $2N_1''$ where $N''$ is the total number of teeth on the tetracohoidal sprocket wheel.

Where a five lobed sprocket wheel is provided, the arc length L''' of each side of the sprocket wheel will be equal to PCD/10 although again "N" in the above expression for determining the PCD in a circular sprocket wheel needs to be replaced by $2N_1'''$ where $N'''$ is the total number of teeth provided on the five lobed sprocket wheel.

It has been found that particularly for a non-circular front sprocket wheel arrangement, the epitrochoidal configuration described is preferred because particularly for competition purposes, for example in motorcross where very slippery road conditions are encountered, a variation of torque of 33.3% of the maximum has been found to be ideal.

Furthermore, although only arrangements wherein the front sprocket wheel 14 is non-circular has been described, if desired the rear sprocket wheel 20 may be made non-circular instead of or in addition to the front sprocket wheel 14.

Preferably in this latter arrangement, the front sprocket wheel 14 is made circular and the rear sprocket wheel 20 has less than about nine lobes. This is because it will be appreciated that the rear sprocket wheel in a motor cycle is usually larger than the front sprocket wheel. Thus typically, a gear ratio of about 3 : 1 is achieved between the front and rear sprocket wheels. Where the front sprocket wheel is three-lobed, the rear sprocket wheel will thus have nine pulses transmitted thereto for each rotation of the rear sprocket wheel; where the front sprocket wheel is five-lobed, fifteen pulses will be transmitted.

This number of pulses has been found to be ideal. Further, because the front sprocket wheel has relatively few lobes, i.e. three or five, the variations in torque are large, i.e. between $33\frac{1}{3}$% and 10% respectively.

If it is required to achieve the same number of pulses by making the rear sprocket wheel non-circular, then nine or fifteen-lobed sprocket wheel respectively, would need to be provided and thus the variation in torque applied to the rear wheel would be very small.

Thus it is preferred to use a three or five-lobed front sprocket wheel. If the rear sprocket wheel is lobed then if more than about nine lobes are provided, the magnitude of the variation in torque is too small.

Although a transmission in which torque applied from the engine to the ground wheel or wheels has been described above wherein torque is varied by using a non-circular sprocket wheel or wheels, this variation may be achieved in any other desired manner.

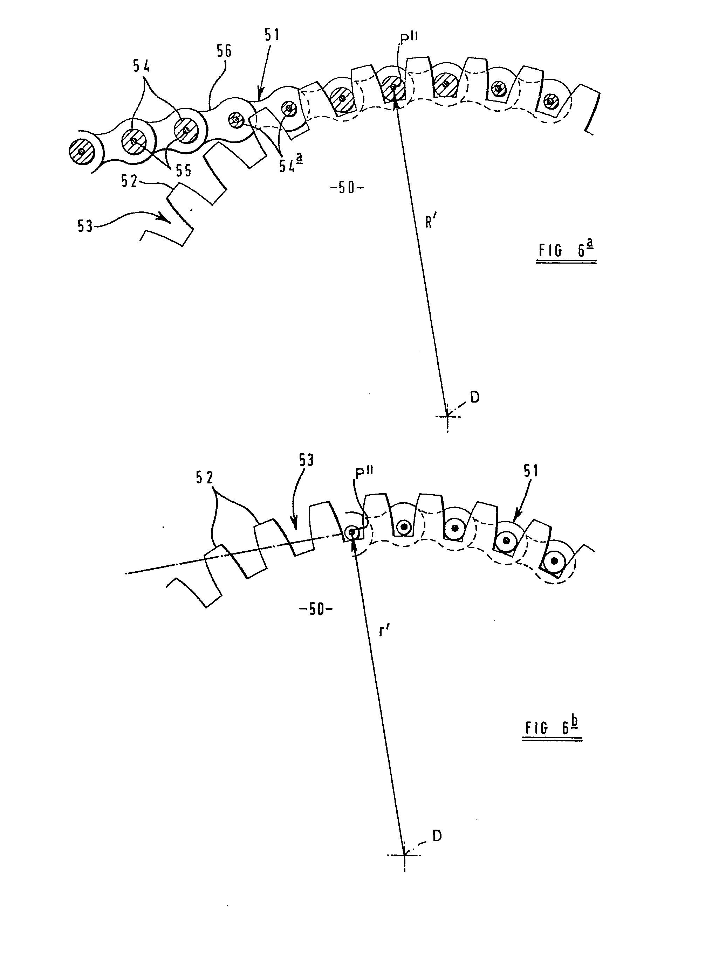

Referring now to Figures 6a and 6b, there is shown a further embodiment of the invention. The front and rear sprocket wheels of a motorcycle (only the rear sprocket wheel 50 of which is shown) are both circular, but the chain 51 is adapted so that the distance between the centre of rotation D of the sprocket wheel 50 to the centre axis of the chain 51, at the operative position indicated at P'' varies between a maximum R' and a minimum r' even though the actual radius of the sprocket wheel 50 remains constant.

The rear sprocket wheel 50 has a plurality of identical teeth 52 between which recesses 53 are formed. The chain 51 has, like a conventional chain, a plurality of rollers 54 carried on rivets 55 which extend between side elements 56, each pair of side elements 56, rivets 55 and rollers 54 providing one link of the chain, although the rivets 55 and rollers 54 are shared with the next adjacent link.

Part of the link chain 51 is shown in section in Figure 6a from which it can be seen that after every three rollers 54 of the chain 51, two rollers 54a of smaller diameter than the remaining rollers 54 are provided.

As the chain 51 engages the teeth 52 of the sprocket wheel 50, the rollers 54, 54a are received in the recesses 53. At the operative position P'', i.e. in this case, the position on the circumference of the sprocket wheel 50 at which the chain 51 is tangential to the sprocket wheel 50, a roller 54 or 54a is located in the bottom of the recess 53, the roller 54 or 54a serving to transmit torque from the chain 51 to the sprocket wheel 50.

It will be appreciated that because some rollers 54a of the chain 51 are of reduced diameter, the distance from the centre of rotation D of the sprocket wheel 50 to the axis of the chain, which converges at the operative position with the axis of rotation of roller 54 or 54a, will vary between r' when a small roller 54a is in the operative position P'' (see Figure 6b) and R' when a large roller 54 is in the operative position P'' (see Figure 6a), although of course the actual pitch circle radius of the sprocket wheel 50 itself remains constant.

Because in this embodiment it is the configuration of the chain 51 which has the effect of varying the distance between r' and R', a similar variation in the distance would occur at the front sprocket wheel, and thus together the front and rear sprocket wheels and chain provide a pulsed driving torque to the rear wheel of the motorcycle to reduce skidding.

In this embodiment it is preferable for a chain tensioner and guide means to be provided, for example, in a similar manner to that described with reference to Figure 2.

Although in the above example after every three rollers 54 of the chain 19 two rollers 54a of reduced diameter are provided, it would of course be possible for every other roller, or every third roller or even large groups of rollers along the length of the chain, to be of reduced diameter depending on the number of pulses it is required to transmit to the ground wheel 11 during each rotation thereof. Further, instead of providing rollers 54, 54a of different diameters, if desired the rollers may be omitted whereby the rivets 55 themselves are received in the bottom of the recesses 53.

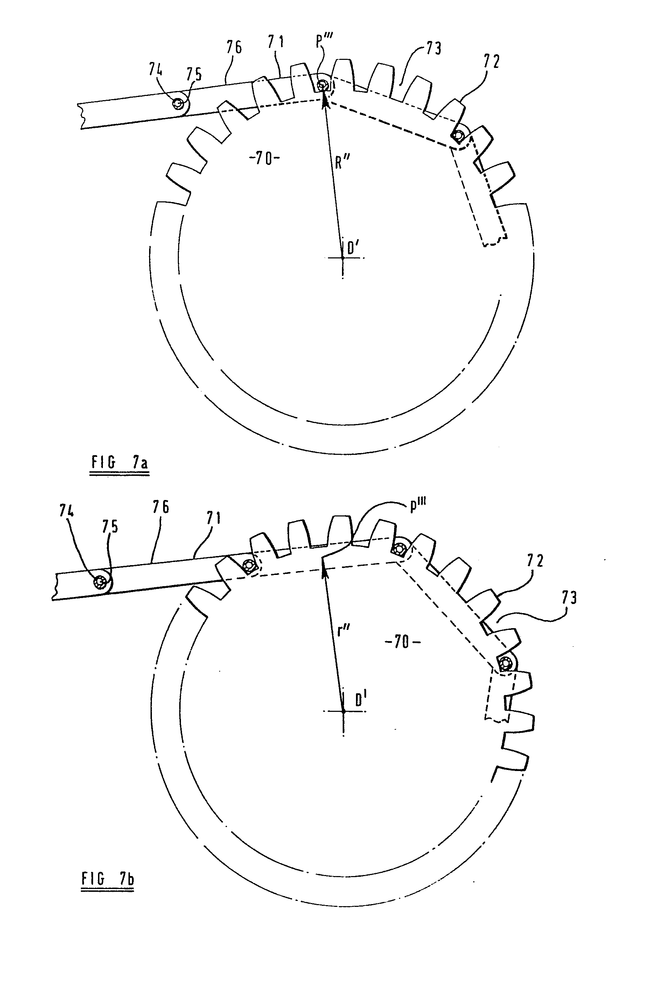

Referring now to Figures 7a and 7b, there is shown a still further embodiment of the invention. The front and rear sprocket wheels of a motor cycle (only the rear sprocket wheel 70 of which is shown) are both circular, but the chain 71 is adapted so that the distance between the centre of rotation D' of the sprocket wheel 70 to the centre axis of the chain 71 at an operative position indicated at P''', varies between a maximum R'' and a minimum r'' even though again the actual radius of the sprocket wheel 70 remains constant.

The rear sprocket wheel 70 has a plurality of identical teeth 72 between which recesses 73 are formed. The chain 71 has, like a conventional chain, a plurality of rollers 74 carried on rivets 75 which extend between side elements 76, each pair of side elements 76, rivets 75 and rollers 74 providing one link of the chain 71, although the rivets 75 and rollers 74 are shared with the next adjacent link.

Part of the link chain 71 is shown in section in Figure 7a from which it can be seen that unlike a conventional chain, or the chain 50 of Figures 6a and 6b, the spaces between the rollers 74 are greater than the spaces between adjacent recesses 73 of the sprocket wheel 70, in fact an exact multiple thereof.

As the chain 71 engages the teeth 72 of the sprocket wheel 70, the rollers 74, 74a are received in the recesses 73. When a roller such as roller 74a is in the operative position P''', and thus is effective to transfer the torque from the chain 71 to the sprocket wheel 70, the side elements 76 are tangential to the circumference of the sprocket wheel 70 and the distance from the centre of rotation D' of the sprocket wheel 70 to the operative position P''' is R''. However, because the spaces between the rollers 74 are greater than the spaces between adjacent recesses 73, as the sprocket wheel 70 continues to rotate to the Figure 7b position, the side elements 76 will extend either side of the sprocket wheel 70 and the same roller 74a will remain effective to transfer torque from the chain 71 to the sprocket wheel 70. When in the Figure 7b position the operative position P''' will be a position mid-way between the two adjacent rollers 74a at which torque is effectively transferred between the chain 71 and the sprocket wheel 70 which is spaced a distance r'' from the centre of rotation D'. Again, the chain 71 extends tangentially from the operative position P'' although the operative position is spaced inwardly of the circumference of the sprocket wheel 70.

Again, because in this embodiment it is the configuration of the chain 71 which has the effect of varying the distance between the centre of rotation D' and the operative position P''' between r'' and R'', a similar variation in distance would occur at the front sprocket wheel and thus together the front and rear sprocket wheels and chain provide a pulsed driving torque to the rear wheel of the motor cycle to reduce skidding.

If desired, the distance between each roller 74 of the chain 71 can be greater than the pitch of the teeth 72, although if desired only part or parts of the chains may be of this configuration, the remainder of the chain being of a conventional design wherein the distance between adjacent rollers is equal or substantially equal to the pitch of the teeth of the sprocket wheels.

Again the exact configuration of chain chosen will depend on a number of pulses per revolution of the ground wheel it is desired to transmit to the ground wheel.

Again, in this embodiment it is preferable for a chain tensioner and guide means to be provided, for example, in a similar manner to that described with reference to Figure 2.

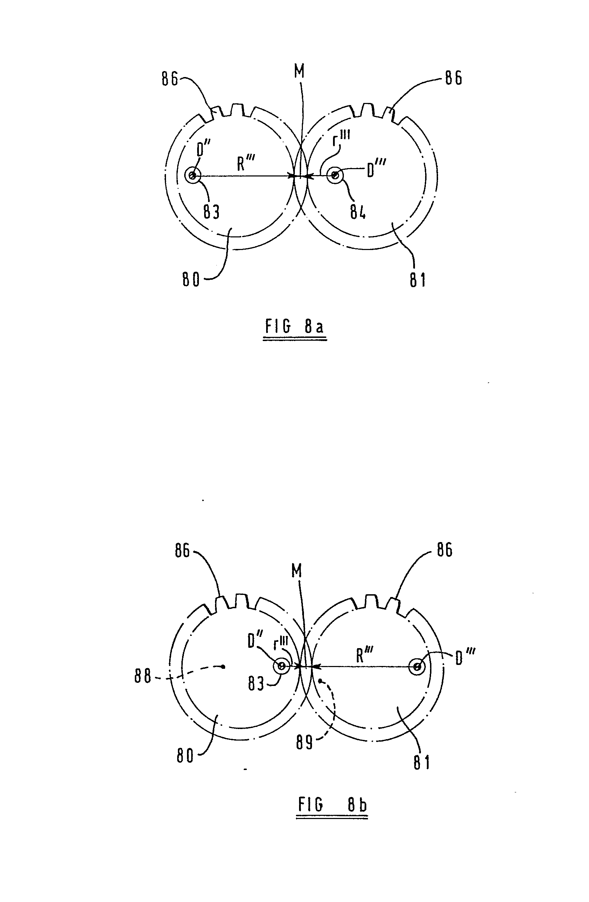

Referring now to Figures 8a and 8b, there is shown a yet still further embodiment of the invention.

Two cog wheels 80, 81 of the gear box of a motor cycle are each mounted for eccentric rotation about an axis D'', D''' respectively.

The cog wheel 80 is driven on a shaft 83 from an engine and thus comprises a drive wheel. The other cog wheel 81 is mounted on a shaft 84 which is coupled by further gears, a belt, chain or the like, to a ground engaging means such as the rear wheel of the motor cycle.

The cog wheels each have teeth 86 which mesh at an operative position indicated at M, i.e. a position at which torque is transmitted from cog wheel 80 to cog wheel 81.

The distance between the two centres of rotation D'', D''' remain constant, although the distances from the centres of rotation D'' and D''' to the operative position M varies.

When the cog wheels 80, 81 are in the Figure 8a position, it can be seen that the distance from D'' to M is R''', although the distance from D''' to M is only r'''.

R''' is the maximum distance and r''' is the minimum distance which can be achieved.

As the cog wheels 80, 81 rotate through 180°, to the Figure 8b position, it can be seen that now the distance from the centre of rotation D'' to the operative position M has reduced to the minimum r''', whilst the distance from the centre of rotation D''' to the operative position of cog wheel 81, has increased to R'''.

Thus the torque transmitted from the cog wheel 80 to the cog wheel 81 varies sequentially during rotation of the cog wheels and this variation in torque is transmitted from the shaft 84 of cog wheel 81 to the rear wheel.

Preferably means are provided to urge the two cog wheels 80 and 81 together to ensure meshing, such as a cam means or further gear means or even a spring link connecting the cog wheels.

Because the two cog wheels 80, 81 shown are of the same diameter, and mounted for eccentric movement about substantially similar centres, the distance between the two centres D'' and D''' remains constant as said above.

Where the cog wheels are mounted about different centres such as those indicated in dotted lines at 88 and 89 or, where the cog wheels are of different diameter, the distance between the centres of rotation of each would vary and particularly with these types of arrangements, have means to urge the cog wheels together to ensure meshing engagement of the teeth would be essential.

In each case described above, the torque applied to the ground wheel is sequentially varied and this has been found to reduce the tendency of the ground wheel to spin relative to the ground when the reaction torque of the ground is low, due to the presence of, for example, mud or other slippery conditions.

Although the above description has been in relation to a motorcycle, it will be appreciated that the invention is applicable to many other types of loop driven vehicle, although in a motorcycle, the instability caused by a slipping wheel is much more serious than in say a vehicle having a ground-engaging means comprising four-wheels, and thus the invention is particularly applicable to motorcycles.

CLAIMS:

1. A transmission for transmitting drive from a power unit to a rotatable ground-engaging means (11,51), characterised in that said transmission including means (14,19; 50,51; 70,71; 80,81)sequentially to increase and decrease the torque applied to the ground-engaging means (11,51) at least once during each rotation of the ground-engaging means (11,51).

2. A transmission according to Claim 1 characterised in that the transmission includes gear means (14, 19; 50,51; 70,71; 80,81) and the torque is sequentially increased and decreased by sequentially changing the distance from a centre of rotation of at least one gear wheel (14,50, 70,80) of the gear means to an operative position (P',P'',P''',M) comprising a position at which torque is transmitted between the gear wheel (14,50; 70,80) and an engaging further gear (19,51,71,81).

3. A transmission according to Claim 2 wherein said gear means (14,19; 50,51; 70,71) comprises a drive wheel (14) driven by the power unit, and a driven wheel (20,50,70) operatively connected to the ground-engaging means (11,51), a continuous loop (19,51,71) engaging the drive (14) and driven (20,50,70) wheels, one of the wheels (14,20,50,70) comprising said gear wheel.

4. A transmission according to Claim 3 characterised in that the gear wheel (14) is of non-circular configuration.

5. A transmission according to Claim 4 characterised in that the non-circular wheel (14) has an odd number of lobes (21).

6.    A transmission according to Claim 5 characterised in that the gear wheel has up to nine lobes.

7.    A transmission according to Claim 3 characterised in that said loop (51) comprises a plurality of side elements (56) connected together by transverse elements (54,55), at selected intervals along the loop (51), one (54a) or more of said transverse elements (54,55) being of reduced size to enable the loop (51) to move closer radially inwardly of the drive or driven (50) wheels at said respective operative positions (P'') than the remaining transverse elements (54).

8.    A transmission according to Claim 3 characterised in that said drive and driven wheels each comprise a sprocket wheel (70), which wheels (70) are engaged by a chain loop (71) comprising a plurality of side elements (76) connected together by transverse elements (74,75) which are received in spaces (73) between teeth (72) of the sprocket wheel (70), the distance over at least part of the length of the loop (71), between adjacent transverse elements (74,75) being greater than the distance between said spaces (73) of the sprocket wheels (70).

9.    A transmission according to Claim 2 characterised in that said gear means includes a gearbox of the transmission in which said gear wheel (80) is mounted for eccentric rotation about a shaft (83), said gear wheel (80) meshing with a further gear wheel (81) mounted for eccentric rotation about a shaft (84).

10.  A vehicle (10) incorporating a transmission according to any one of Claims 1 to 9.

11.  A vehicle (10) according to Claim 10 characterised in that the vehicle comprises a loop driven vehicle.

FIG 1

FIG 2

FIG. 3

FIG 4

FIG 5

FIG 6$\underline{a}$

FIG 6$\underline{b}$

FIG 7a

FIG 7b

6/6

FIG 8a

FIG 8b

European Patent
Office

**EUROPEAN SEARCH REPORT**

Application number

EP 82 10 4824

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A- 943 030 (PRECISION ENGINEERS) *Figures 1-6; page 1, line 66 - page 2, line 67* | 1-6 | B 62 M 9/08 |
| A | US-A-4 193 324 (MARC) *Figure 1; column 2, line 47 - column 3, line 35* | 1-4,10 -11 | |
| A | US-A-3 850 044 (HAGEN) *Figure 3; column 3, lines 45-58* | 6 | |
| A | GB-A-1 409 178 (LAMPART) | | |
| A | GB-A- 521 249 (DESCHAMPS) | | |
| | ----- | | **TECHNICAL FIELDS SEARCHED (Int. Cl. 3)** B 62 M F 16 H |

The present search report has been drawn up for all claims

| Place of search THE HAGUE | Date of completion of the search 09-08-1982 | Examiner GEMMELL R.I.D. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82